Europäisches Patentamt

(19) European Patent Office

Office européen des brevets

(11) Publication number: **0 115 209**
**A1**

## (12) EUROPEAN PATENT APPLICATION

(21) Application number: **83307985.8**

(22) Date of filing: **23.12.83**

(51) Int. Cl.³: **F 15 B 15/26**
**A 47 C 3/30, A 47 C 1/024**

(30) Priority: **24.12.82 GB 8236852**

(43) Date of publication of application:
**08.08.84 Bulletin 84/32**

(84) Designated Contracting States:
**AT BE CH DE FR IT LI LU NL SE**

(71) Applicant: **Hatrick Industries Limited**
**Claremont House Claremont Bank**
**Shrewsbury Shropshire(GB)**

(72) Inventor: **Norton, Harry William**
**Hunters Moon Sheet Road**
**Ludlow Salop(GB)**

(74) Representative: **Mosey, Stephen George et al,**
**Marks & Clerk Alpha Tower Suffolk Street Queensway**
**Birmingham B1 1TT(GB)**

(54) Fluid operated device.

(57) A piston (11) is slidably disposed in a cylinder (10) and divides the interior of the latter into two chambers (12) and (13). The piston (11) contains a one-way valve (16) which permits fluid to flow from chamber (12) to chamber (13) but not vice versa, and a control valve (17) which is operable by means of an actuator rod (27) housed within a hollow piston rod (14) selectively to permit and prevent fluid flow from the chamber (13) to the chamber (12). The control valve (17) contains a constricted passage (23) to restrict the rate at which fluid can flow through the valve (17).

Croydon Printing Company Ltd.

FIG. I.

This invention relates to a fluid operated device of the type comprising a cylinder within which a piston is slidably disposed, the piston being freely movable relative to the cylinder in one direction but being constrained in its movement in the opposite direction, and wherein the piston can be locked against movement in said opposite direction. The invention has as its object the provision of such a device in a simple and compact form.

According to the invention, a fluid-operated device comprises a cylinder, a piston slidable within the cylinder and dividing the interior thereof into first and second chambers, one-way valve means which allows flow of fluid from the first chamber to the second but which prevents flow from the second chamber to the first, and a control valve operable selectively to allow and prevent flow of fluid from the second chamber to the first, the control valve including a constriction to restrict the rate of such flow.

The device may also comprise a hollow piston rod connected to the piston and extending through one of the chambers to the exterior of the cylinder, the control valve being provided in the piston with the hollow piston rod containing an actuator therefor. In this case, the control valve is desirably composed of a sub-chamber defined within the piston, a constricted passage providing communication between the sub-chamber and the second chamber, and a valve member which can selectively open and close communication between the sub-chamber and the first chamber, the valve member being acted on by the actuator contained in the hollow piston rod. The valve member may take the form of a poppet valve which is moved towards the first chamber to open communication between the latter and the sub-chamber.

Advantageously, the one-way valve means is provided in or on the piston, and may for example comprise a passage which extends between the first and second chambers and a seal member which is movable relative to the piston, the seal member normally closing communication between the first and second chambers through the passage but being moved relative to the piston to open such communication when the piston is displaced towards the first chamber.

Conveniently, the seal member is provided on the outer periphery of the piston and provides a seal between the piston and the cylinder. In this case, it is desirable that the seal member is retained in an annular groove in the external periphery of the piston, and said passage is defined in part by an annular space between the interior surface of the cylinder and the outer periphery of the piston, fluid communication between said annular space and said annular groove being opened and closed by axial movement of the seal member within the annular groove.

The invention will now be further described, by way of example only, with reference to the accompanying drawing, in which:-

Figure 1 is a longitudinal sectional view, partly cut away, of a fluid-operated device according to the present invention; and

Figure 2 shows a part of Figure 1 on an enlarged scale.

The illustrated device comprises a hollow cylinder 10 within which a piston 11 is slidably disposed, the piston 11 dividing the interior of the cylinder 10 into a first chamber 12 and a second chamber 13. A hollow piston rod 14 is connected to the piston 11 by means of screw-threading 15, and extends through the chamber 13 to the exterior of the cylinder 10. Provided in or on the piston 11 are a one-way valve 16 which permits fluid to flow from the chamber 12 to the chamber 13 but which prevents such flow in the opposite direction, and a control valve 17 which is operable selectively to allow and prevent the flow of fluid from the chamber 13 to the chamber 12.

The one-way valve 16 is composed of a series of passages 18 in the piston 11 which extend between the chamber 13 and an annular groove 19 formed in the outer periphery of the piston, and a further passage which extends between the chamber 12 and the groove 19 and which is defined by an annular space 20 between the internal wall of the cylinder and the outer periphery of the piston. An annular seal member 21 is received in the groove 19 and is capable of axial movement relative to the piston within the groove. In the static state, the seal member 21 abuts a side wall of the groove 19 adjacent to the annular space 20 (as illustrated) and thus closes communication between the space 20 and the groove 19. However, when the piston 11 is moved towards the chamber 12, the pressure of fluid in that chamber causes the seal member 21 to engage a side wall of the groove adjacent to the passages 18, thereby opening communication between the space 20 and the groove 19. Fluid can thus flow from the chamber 12 to the chamber 13 through the space 20, the groove 19 and the passages 18.

Because the seal member 21 is mounted on the outer periphery of the piston 11, it serves the additional purpose of sealing the piston against the internal wall of the cylinder 10.

The control valve 17 is composed of a sub-chamber 22 defined within the piston 11, a single constricted passage 23 which provides communication between the sub-chamber 22 and the chamber 13, (by way of the groove 19 and the passages 18), and a poppet valve 24 which controls communication between the sub-chamber 22 and the chamber 12. A compression spring 25 normally urges the valve 24 into engagement with a seat 26 at the mouth of the sub-chamber 22. However, the valve 24 can be lifted off the seat 26 in a direction towards the chamber 12 by means of an actuating rod 27 which contacts an end of the valve 24 and which extends through the interior of the hollow piston rod 14. A seal assembly 28 surrounds a part of the valve 24 which lies within the piston rod 14 to prevent the escape of fluid through the interior of the latter. The seal assembly 28 performs an additional important function, in that its area is greater than that of the valve seat 26, so that the fluid pressure acting on the seal assembly will assist the spring 25 in urging the valve 24 into a closed position.

As will be explained in detail later, the passage 23 imposes a restriction on the rate at which fluid can flow through the control valve 17 from the chamber 13 to the chamber 12. Although not illustrated, it is possible to provide a wire ring in the groove 19 with one end of the ring being received in the passage 23 with clearance. Thus, the degree of restriction will be determined by the clearance between the exterior of the wire and the side wall of the passage 23, and can be pre-set during assembly of the device by suitably chosing the wire ring from a number of such rings having differing cross-sectional dimensions.

In operation, it is intended that the device should be oriented with the chamber 12 uppermost. When the piston 11 is moved upwardly, as mentioned previously the fluid pressure in the chamber 12 causes the seal member 21 to move axially within the groove 19, thereby allowing fluid to flow from the chamber 12 to the chamber 13 through space 20, the groove 19 and the passages 18. Hence, upward movement of the piston 11 is freely permitted. However, as soon as such movement ceases, a slight downward movement of the piston brings the seal member 21 back into contact with the side wall of the groove adjacent to the annular space 20, thereby closing communication between the space 20 and the groove 21 so as to prevent fluid flowing from the chamber 13 back into the chamber 12. Under this condition, the piston 11 is locked against downward movement. In order to release this lock, it is necessary to displace the actuating rod 27 upwardly within the piston rod 14, thereby lifting the poppet valve 24 off the seat 26. Fluid can then flow from the chamber 13 to the chamber 12 by way of the passage 23 and the sub-chamber 22, the rate of this flow being determined by the constriction provided by the passage 23. Hence, upon displacement of the actuating rod 25, the piston 11 can move downwardly at a controlled rate.

Because of the presence of the piston rod 14 in the chamber 13, a given displacement of the piston 11 will cause a change in volume of the chamber 13 which is rather less than the corresponding change in volume of the chamber 12. In order that an amount of air corresponding to the difference between these volume changes can enter or leave the chamber 12 as necessary, air venting valves 29 are provided in an end wall 30 of the cylinder 10. The cylinder will of course be charged with an amount of fluid (such as oil) sufficient to fill the chamber 13 when the piston 11 is at the end of its stroke, adjacent the cylinder end wall 30.

Alternatively, where a sufficiently large clearance volume can be obtained at the maximum stroke of the piston, the valves 29 can be omitted and instead the clearance volume can be filled with a compressible fluid, preferably an inert gas. The resilience of this fluid when compressed will act to impart a pre-load or bias on the piston.

In an alternative embodiment (not illustrated), the piston rod 14 extends to the exterior of the cylinder 10 through the chamber 12, rather than through the chamber 13. In this case, however, since the chamber 13 will now experience a greater change in volume than the chamber 12 when the piston is displaced by a given amount, either an auxiliary fluid reservoir must be provided, or the stroke of the piston must be limited to less than the length of the cylinder 10.

Although as described above the one-way valve 16 can be provided on the piston 11 itself, it may alternatively be included in a fluid line extending between the chambers 12 and 13 and disposed externally of the cylinder 10. For certain applications, a fluid pump can then be provided in this line so that powered operation of the device can be achieved.

The device described above has many and varied applications. It is, however, particularly suited for use in the wheelchair tipping apparatus described in our co-pending UK Patent Application No. (our reference 103890J) of even date.

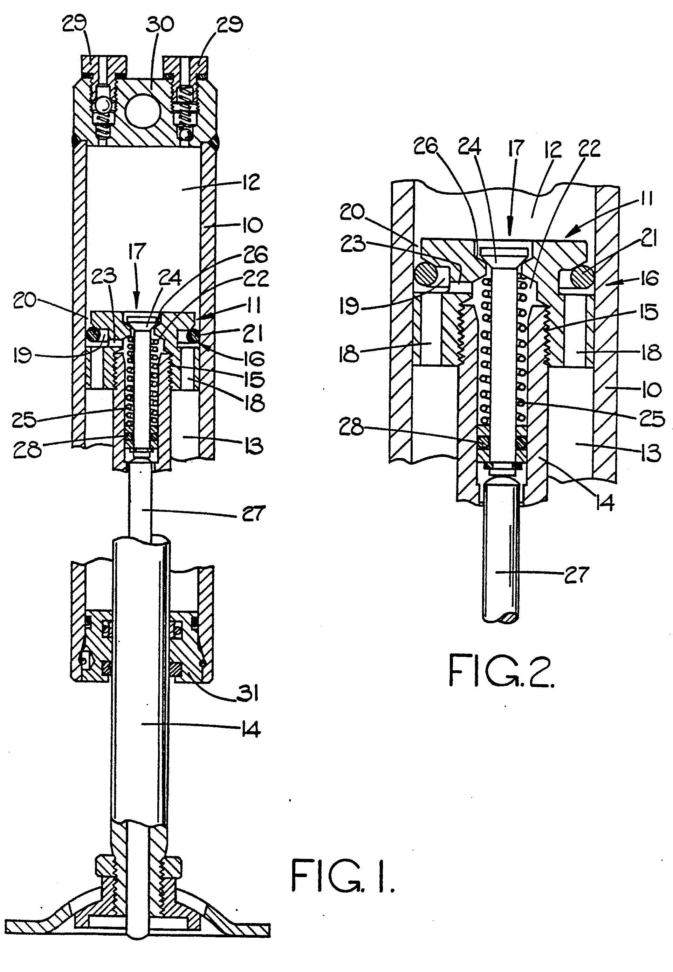

It will be manifest from the above description that the one-way valve 16 and the control valve 17 are arranged so as to permit the device to compress freely while restricting the rate at which it can expand. In an alternative embodiment, operation of the valves 16 and 17 is reversed, so that the device can be freely expanded but cannot be compressed except at a controlled rate. In this case, the device will be inverted from the orientation shown in the drawings, and the piston 11 will essentially be reversed so that the seal member 19 now acts to permit fluid flow from the chamber 13 to the chamber 12 whilst preventing such flow in the opposite direction. In addition, the valve 17 will be arranged so that it normally prevents fluid from flowing from the chamber 12 to the chamber 13, the actuator rod 27 being operable to move the valve member 22 so as to permit such flow. Furthermore, because the chamber 13 will now be uppermost, if the air venting valves 29 are provided, it will be necessary to dispose these at an end of the chamber remote from the piston 11, either in a gland packing 31 (see Figure 1) through which the piston rod 14 passes or in a part of the cylinder wall adjacent to this packing.

CLAIMS:

1. A fluid-operated device comprising a cylinder (10), a piston (11) slidable within the cylinder (10) and dividing the interior thereof into a first chamber (12) and a second chamber (13), one-way valve means (16) which allows flow of fluid from the first chamber (12) to the second chamber (13) but which prevents flow from the second chamber (13) to the first chamber (12), and a constriction (23) which permits the fluid to flow from the second chamber (13) to the first chamber (12) at a controlled rate, characterised in that the constriction (23) forms part of a control valve (17) which is operable selectively to allow and prevent the flow of fluid from the second chamber (13) to the first chamber (12).

2. A device as claimed in claim 1, further comprising a hollow piston rod (14) connected to the piston (11) and extending through one of the chambers (13) to the exterior of the cylinder (10), the control valve (17) being provided in the piston (11) with the hollow piston rod (14) containing an actuator (27) therefor.

3. A device as claimed in claim 2, wherein the control valve (17) is composed of a sub-chamber (22) defined within the piston (11), a constricted passage (23) providing communication between the sub-chamber (22) and the second chamber (13), and a valve member (24) which can selectively open and close communication between the sub-chamber (22) and the first chamber (12), the valve member (24) being acted on by said actuator (27) contained in the piston rod (14).

4. A device as claimed in claim 3, wherein the valve member (24) is in the form of a poppet valve which is moved towards the first chamber (12) to open communication between the latter and the sub-chamber (22).

5. A device as claimed in any preceding claim, wherein the constriction (23) is defined by a passage having a member received with clearance therein, the member being chosen from several such members of differing cross-sectional areas according to the degree of restriction on fluid flow required.

6. A device as claimed in claim 5, wherein said passage (23) is provided in the piston (11), and said member forms an end of an annular element which surrounds the outer periphery of the piston (11).

7. A device as claimed in any preceding claim, wherein the one-way valve means (16) is provided in or on the piston (11).

8. A device as claimed in claim 7, wherein the one-way valve means (16) comprises a passage (18,19,20) which extends between the first chamber (12) and the second chamber (13) and a seal member (21) which is movable relative to the piston (11), the seal member (21) normally closing communication between the first chamber (12) and the second chamber (13) through said passage (18,19,20) but being moved relative to the piston (11) to open such communication when the piston (11) is displaced towards the first chamber (12).

9. A device as claimed in claim 8, wherein the seal member (21) is provided on the outer periphery of the piston (11) and provides a seal between the piston (11) and the cylinder (10).

10. A device as claimed in claim 9, wherein the seal member (21) is retained in an annular groove (19) in the external periphery of the piston (11), and said passage is defined in part by an annular space (20) between the interior surface of the cylinder (10) and the outer periphery of the piston (11), fluid communication between said annular space (20) and said annular groove (19) being opened and closed by axial movement of the seal member (21) within the annular groove (19).

FIG. I.

FIG. 2.

European Patent
Office

**EUROPEAN SEARCH REPORT**

**0115209**

Application number

EP 83 30 7985

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 624 566 (C.F. CARAMELLI)<br><br>* Column 1, line 29 - column 4, line 59; figures 1-8 * | 1-4,7-10 | F 15 B 15/26<br>A 47 C 3/30<br>A 47 C 1/024 |
| Y | US-A-2 453 855 (W.C. OLIVER)<br><br>* Complete document * | 1-4,7 8 | |
| Y | US-A-3 236 515 (N. ACKERMAN)<br><br>* Complete document * | 1-4,7 8 | |
| A | | 6 | |
| A | DE-A-2 037 579 (P.L. PORTER)<br><br>* Page 6, line 24 - page 9, line 4; figures 1, 2 * | 1-3,6-8 | TECHNICAL FIELDS SEARCHED (Int. Cl. ³) |
| A | US-A-2 630 887 (J.N. PAQUIN)<br><br>----- | | F 15 B 15/00<br>A 47 C 3/00<br>A 47 C 1/00 |

The present search report has been drawn up for all claims

| Place of search | Date of completion of the search | Examiner |
|---|---|---|
| BERLIN | 01-03-1984 | LEMBLE Y.A.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82